# EUROPEAN PATENT APPLICATION

(11) **EP 1 318 625 A1**
(43) Date of publication of application: **11.06.2003**
(21) Application number: 01403183.5
(22) Date of filing: 10.12.2001
(51) Int. Cl.: H04J 1/06, H04B 7/26

(54) **Method and device for recovering an unknown frequency in digital cellular communications systems**

(71) Applicant: ALCATEL, 75008 Paris (FR)
(72) Inventor: Rouvellou, Laurent, 75012 Paris (FR)
(74) Representative: Lamoureux, Bernard

(57) **Abstract**

Method for recovering an unknown frequency and frequency drift by iterative correlation in multicarrier radio communications applications, particularly in third/second generation mobile communication systems coexistence environments. The invention detects a correlation peak between a known sequence (28) of bits sent by the base station to the mobile and the received signal (26) by the mobile. The frequency recovering process comprises the correction in frequency of a local oscillator (28) in the mobile till the best correlation result between the received burst (26) and the known pattern (28) is achieved.

## Description

### OBJECT OF THE INVENTION

The present invention relates to a method for synchronising in frequency a remote unit that is capable of establishing communications in existing radio communications system as, for example, global for mobile communication (GSM) and in third generation cellular digital communications system as, for example, universal mobile telecommunications system (UMTS).

The invention is of special application to mobile terminal moves from a cell associated to the third generation cellular digital communications system to a cell associated to second generation one.

### STATE OF THE ART

In the transmission systems based on radio, as the cellular mobile communication system, the digital information flows from an end to the other end modulating a carrier. These two sides of the communication are a base station and a mobile terminal. Several carriers are used in every cellular system, assigned in subsets, to cover the different cells.

When the mobile terminal is switched on in a geographical location and accesses the cellular communications system. The mobile terminal must get the synchronism in order to decode modulated signals.

This synchronisation process consists of several steps. First, the mobile station must produce a local frequency in order to tune the received signal. This local frequency generated in the local frequency oscillator must be equal to the one generated in the transmitted end, namely, base station.

Once the local oscillator of the mobile terminal is corrected in frequency, this local oscillator becomes "tuned". Then, the different channels sent in the carrier are detected and demodulated at the mobile terminal which obtains the data.

For example, in GSM the base station transmits a synchronisation signal such as a synchronisation channel (SCH). Once the mobile station has detected the beginning of the TDM frame, the information sent in the different user time slots can be demodulated.

As the mobile station roams the cellular environment, the local clock follows the frequency drifts of the base station, and continues in locked state, making easy the demodulation of another time slot in another carrier used in the system (handover process).

If the mobile station is a dual terminal (third & second generation), and it has devoted its receiving resources to camp in the third generation cellular system (e.g. UMTS), the local oscillator drifts its frequency from the previously locked, as it has not received the base station signal during the period the mobile station has been listening the carrier from another system (the third generation one).

So, if the mobile station is commanded to go back into the second-generation system again, it must recover the frequency synchronism correcting the unknown drift. This situation should happen if the mobile terminal uses the resources of a third generation cellular system and it is commanded to handover to a new carrier and time slot that belong to a second generation system, because it has entered a cell not covered by the third generation system.

For instance, to accomplish the synchronisation process of the dual mobile terminal is to estimate the frequency drift from the drift between the clocks of the second-generation clock circuit in the dual mobile terminal and the third generation one, and the frequency drift between the second generation mobile terminal clock and the second generation base station clock. This method is of a big cost in terms of hardware resources, power consumption and system complexity.

In view of the above, it is necessary a method to avoid this drawback that corrects in steps the frequency of the local oscillator till a correlation peak between a known sequence of bits and the signal received is detected.

### CHARACTERISATION OF THE INVENTION

The technical problems mentioned above are resolved by the invention by constituting a method for recovering an unknown frequency in digital cellular communications systems where a mobile terminal is capable of handling traffic associated at least two different cellular communications systems; wherein a correlation peak is detected between a known bits sequence sent from a base station associated to a first cellular communication system, to the mobile station and a received signal received at the mobile station, the received signal is corrected in frequency with a predetermined shift, meanwhile the correlation peak is unequal to a predetermined threshold in order to stop a local oscillator signal correction; such as the sift is refined by each iteration, and when the correlation peak substantially equals to the predetermined threshold, the received signal is demodulated.

The solution proposed by the present invention is based on the detection of a correlation peak between a known sequence of bits sent by the Base Station and the received signal. This sequence is sent on a carrier in a particular time slot, giving place to the SCH channel (Synchronisation Channel). In GSM, this particular time slot is always the time slot zero out of the eight that modulates the carrier. Said sequence is then compared (correlated) with the received signal.

Then, while the correlation peak does not equal to a threshold value, the local oscillator is corrected in frequency with a predetermined shift. This correlation peak is the output of the device that compares the known sequence with the received signal. The more the received signal resembles the predetermined sequence, the highest this peak is. When the correlation peak exceeds to a threshold value, a refinement phase is entered: small shifts steps around the measured rough value are tried out in order to determine the highest correlation peak, and thus the corresponding frequency shift considered as the estimated frequency drift. The signal can then be optimally demodulated.

Accordingly, one object of the present invention is that of providing a method for processing the digital radio channels in multicarrier radio communications applications, said carriers forming a spectrum allocated to be used for communication, comprising the steps of:
- correlating a known bit sequence with the received signal;
- comparing the output of this correlation with a threshold value; and
- shifting the frequency of the local clock in a predetermined value if the output does not reach the threshold.

Another object of the present invention is that of providing a mobile phone set for use in cellular digital radio communications applications, wherein said mobile phone is adapted for operating with multicarrier channels with a reduced hardware in the synchronisation stage.

According to one aspect of the present invention, said mobile phone set comprises a tuning block adapted to synchronise with the base station when the drift between the base station frequency and the mobile station one is not known.

According to another aspect of the present invention, said mobile station is adapted to perform a handover process between the radio resources of a mobile system and the radio resources of a different one.

According to yet another aspect of the present invention, said mobile station is adapted to perform a handover from a second generation cellular system (i.e. GSM) to another one of the third generation (i.e. UMTS).

Therefore, it is appreciable that the system and the method of the present invention provide a substantial simplification in the overall synchronisation process of the mobile phone set, and as a consequence, provides a low cost solution.

### BRIEF DESCRIPTION OF THE DRAWINGS

The present invention will be better understood by way of the following detailed description with the aid of the accompanying figures, in which:
- figure 1 shows a simplified schematic drawing of a cellular network in accordance an embodiment of the present invention,
- figure 2 is a schematic view of an example of embodiment,
- figure 3 is a schematic of another example of embodiment based on two steps correlation peak detection, and
- figure 4 is a schematic view of another example of embodiment based on two steps correlation peak detection with a modulated correlation filter.

### DESCRIPTION OF THE INVENTION

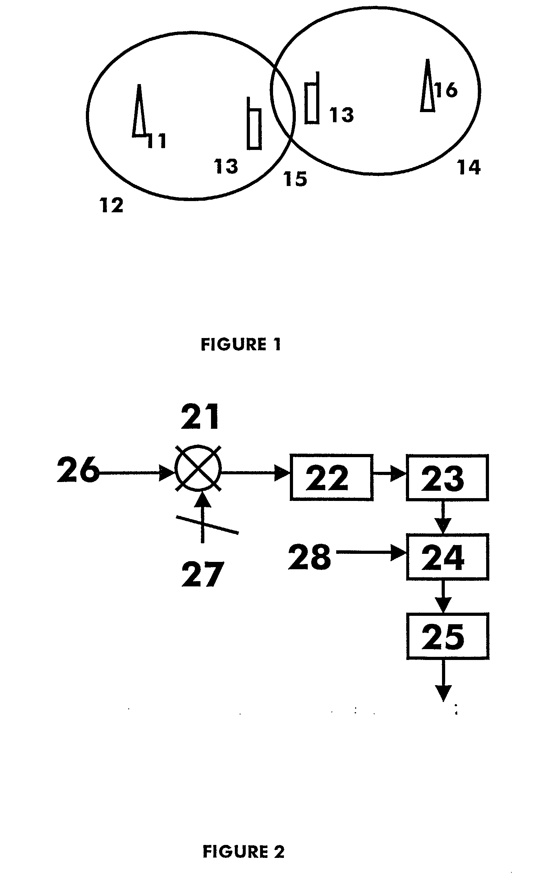

As shown in figure 1, a base station 11 associated to universal mobile telecommunications system (UMTS) defines coverage area 12 by which mobile terminals 13 move. The mobile terminal 13 can represent one or more of a plurality of dual mobile terminals capable of handling traffic associated a global for mobile communication (GSM) and in third generation cellular digital communications system as, for example, UMTS system.

The mobile terminal 13 is coupled via an air interface to base station 11. Therefore, the mobile terminal 13 transmits and receives traffic (e.g. UMTS) to and from the base station 11.

The cell 12 overlaps a cell 14 associated to GSM system at region 15. The transmission from base station 16 defines the coverage area 14 associated to GSM system. Consequently, the mobile terminal 13 is coupled via an air interface to base station 16. Therefore, the mobile terminal 13 transmits and receives traffic (e.g. GSM) to and from the base station 16.

As the mobile terminal 13 moves into or near coverage area 14, it must be synchronised which the base station 16 in order to switch on from the base station 11 to base station 16.

Therefore, the terminal 13 would listen to the GSM neighbouring cell 14 to demodulate a general synchronisation burst (e.g. synchronisation burst SCH in GSM system) for obtaining the synchronisation with the base station 16.

In other word, the base station 16 issues synchronisation information, such as a pattern known as frequency correction burst, used for frequency synchronisation of the mobile, and the synchronisation burst SCH used for time synchronisation of the mobile. In general, there is a time slot in one of the carriers used in a cell is reserved for broadcast general data of the GSM system, and to provide a path for signalling handshaking.

Once the mobile 13 has tuned a carrier with the beacon channel, it can decode the rest of the beacon information and camp in the cell 14. In this state, the mobile 13 can issue or receive signalling messages, in order to setup calls. These calls use traffic channels, in order to transmit voice and data.

The traffic channel in a TDM system, such as GSM, is a time slot inside a carrier. When the mobile 13 changes its position and gets a better beacon channel, it can receive a handover command, in order to switch to a different traffic channel.

Once the mobile 13 roams the UMTS system, it can move to a border position where the coverage from second generation TDM system, belonging to the same operator, becomes higher. Then a handover command is issued from the UMTS system describing the carrier and slot of the new bearer resource.

Then, the mobile13 must tune the TDM carrier in order to change to the new channel. As long as the mobile 13 quit tuning the TDM beacon channel when it camped in the UMTS environment, it does not know the present drift of the TDM carrier from the moment it stop tuning this beacon. So, it has the issue of quickly synchronising in frequency the mobile 13 and the base station 16, tuning the local oscillator in order to correct the drift.

In according with the present invention, the terminal mobile 13 is capable to demodulate synchronisation burst SCH without a priori knowledge of frequency drift.

The mobile terminal 13 includes a local oscillator 22 that is corrected in frequency in fixed steps till a correlation peak is detected from the comparison between the received signal (e.g. synchronisation burst) 21 from the base station 16 and a known sequence of bits included in the SCH burst

Figure 2 is a simplified demodulation chain teaches a combiner circuit 21 which output is inputted to an input of an adjacent channel filter 22. An impulse response estimator 23 is coupled to an output of the adjacent channel filter 22. An output of the estimator 23 is inputted to an input of a match filter 24. An equaliser 25 is coupled to an output to the match filter 24, and generates at its output a signal (e.g. sum of squared) 29 which is forwarded to a decision entity that performs a soft decision process.

It may be noted how the SCH burst 26 is tuned using the local frequency 27 that is corrected in fixed steps. The received data 26 is demodulated in the demodulator chain using different frequencies of the local oscillator 27, and the results stored in the (24). Then, the correlation 24 with a known pattern (e.g. training signal) 28 is performed and the best result selected 29. In consequence, the related local oscillator frequency 27 is selected as well.

The solution proposed by the present invention is based on the detection of a correlation peak between a known sequence 28 of bits and the received signal 26 which is sent on a carrier in a particular time slot, SCH burst. In GSM, this particular time slot is always the time slot zero out of the eight that modulates the carrier.

The received signal 26 is different of the transmitted signal. The known sequence 28 is compared (correlated) with the received signal 26. Then, while the correlation peak does not equal to a predetermined threshold, the local oscillator 27 is corrected in frequency with a predetermined shift.

This correlation peak is the output of the device that compares the known sequence with the received signal. The more the received signal resembles the predetermined sequence, the highest this peak is. When the correlation peak exceeds to a threshold value, a refinement phase is entered: small shifts steps (e.g. 1 kHz) around the measured rough value are tried out in order to determine the highest correlation peak, and thus the corresponding frequency shift considered as the estimated frequency drift.

For example, by step of 3kHz on deviating from the initial value. The process is stop when the Viterbi equaliser 25 obtains an acceptable value of the sum of squared 29 soft decision. Then signal data can then be optimally demodulated. Since, a small drift is more likely than a big one.

The 3kHz step is the bigger step that can be chosen without taking a big non-detection risk. All frequencies would not be tried out, thus the CPU load will depend on the drift to recover from.

When the correlation peak equals to threshold value, the present local oscillator frequency 27 is used to detect the TDM signal and demodulate the related data. Then the mobile 13 can read the beacon information and access to the signalling channels to complete the handover process.

In addition, the match filter 24 and the Viterbi equaliser 25 are inactive if the impulse response estimation 23 obtains at its output a signal lower quality. The received signal 26 is corrected in frequency with all possible values of the drift between -3kHz and 3kHz by 1 kHz step, therefore the whole demodulation chain is used. The resulting output is then stored and the best demodulation is selected.

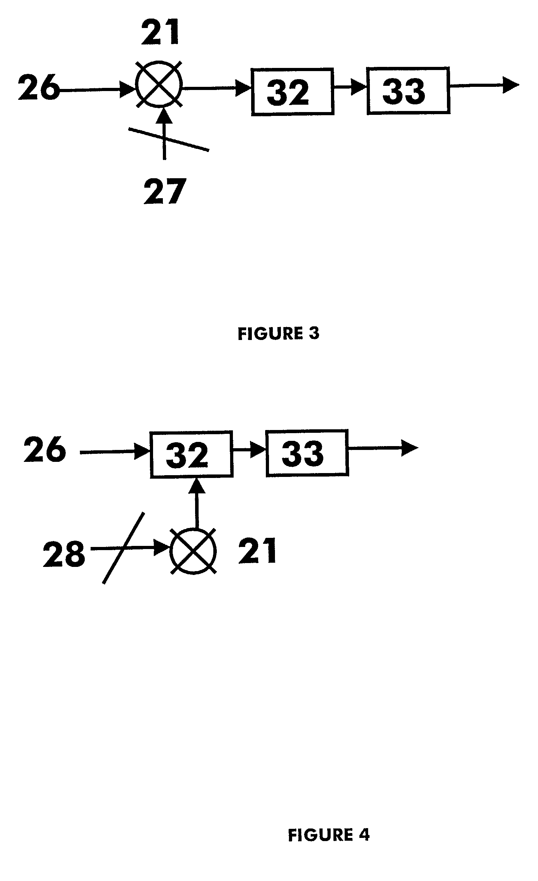

Referring to the figure 3, it may be noted another embodiment of the method. In this case the received signal 26 is tuned with the variable local frequency 27 and the output presented to a correlation filter 32, that offers its output to the peak detection 33. The length of the training sequence 28 gives a powerful mean of discrimination. Therefore, the criteria for selecting the frequency 27 will be based on the peak energy.

Referring to the figure 4, it may be noted that the previous embodiment can be enhanced if instead of correcting the received samples 26 in frequency, the correlation filter 32 is modulated with the variable local oscillator frequency 28 till the best correlation result is obtained.

## Claims

1. **Method for recovering an unknown frequency** in a mobile station (13) is capable of handling traffic associated at least two different cellular communications systems; **characterised in that** the method includes the following steps:
- correlation peak is detected between a known bits sequence (28) sent from a base station (16) associated to a first cellular communication system, to the mobile station (13) and a received signal (26) received at the mobile station (13),
- received signal (26) is corrected in frequency with a predetermined shift, meanwhile the correlation peak is unequal to a predetermined threshold in order to stop a local oscillator signal (27) correction; such as the sift is refined by each iteration,
- when the correlation peak substantially equals to the predetermined threshold, the received signal (26) is demodulated.

2. **Method for recovering** in accordance to claim 1; **characterised in that** the synchronisation is temporal within a predetermined range and frequential within a predetermined range as well.

3. **Method for recovering** in accordance to claim 2; **characterised in that** the number of iterations is limited and depends on the targeted frequency range.

4. **Device for recovering an unknown frequency** is capable of handling traffic associated at least two different cellular communications systems; **characterised in that** the device (13) means adapted to detect a correlation peak between a known bits sequence (28) sent from a base station (16) associated to a first cellular communication system, to the mobile station (13) and a received signal (26) received at the mobile station (13); means adapted to correct a received signal (26) in frequency with a predetermined shift, meanwhile the correlation peak is unequal to a predetermined threshold in order to stop a local oscillator signal (27) correction; such as the sift is refined by each iteration; means adapted to correlate the correlation peak substantially equals to the predetermined threshold, the received signal (26) is demodulated.

5. **Device for recovering** according to claim 4; **characterised in that** a mobile terminal (13) includes the device for recovering an unknown frequency.

6. **Mobile terminal** according any proceeding claims; **characterised in that** the mobile terminal (13) is adapted to synchronising in frequency with the base station (16) associated with second generation cellular network without a knowledge of the frequency drift between a base station and the local oscillator frequency (27).

7. **Mobile terminal** according to claim 6; **characterised in that** the mobile terminal (13) is adapted to synchronised a second generation cellular network and a third generation one.
